# EUROPEAN PATENT SPECIFICATION

(11) **EP 4 385 901 B1**
(45) Date of publication and mention of the grant of the patent: **23.07.2025**
(21) Application number: 22383220.5
(22) Date of filing: 15.12.2022
(51) Int. Cl.: B64D 39/04

(54) **REFUELLING SYSTEM FOR AIRCRAFT**
BETANKUNGSSYSTEM FÜR FLUGZEUGE
SYSTÈME DE RAVITAILLEMENT EN CARBURANT POUR AÉRONEF

(43) Date of publication of application: 19.06.2024
(73) Proprietor: Airbus Defence and Space, S.A.U., 28906 Getafe - Madrid (ES)
(72) Inventor: POLO CASTAÑO, Alberto, Getafe (ES)
(74) Representative: Elzaburu S.L.P.

(56) References cited:
- EP-B1- 3 842 345
- US-A- 2 879 017
- US-A1- 2006 043 241
- US-A1- 2006 060 710
- US-A1- 2015 041 591
- US-A1- 2020 239 154
- US-A1- 2021 300 585

## Description

### Field of the invention

This invention refers to aerial refuelling systems, with special application in the refuelling of helicopters and airplanes from a tanker aircraft.

### Background of the invention

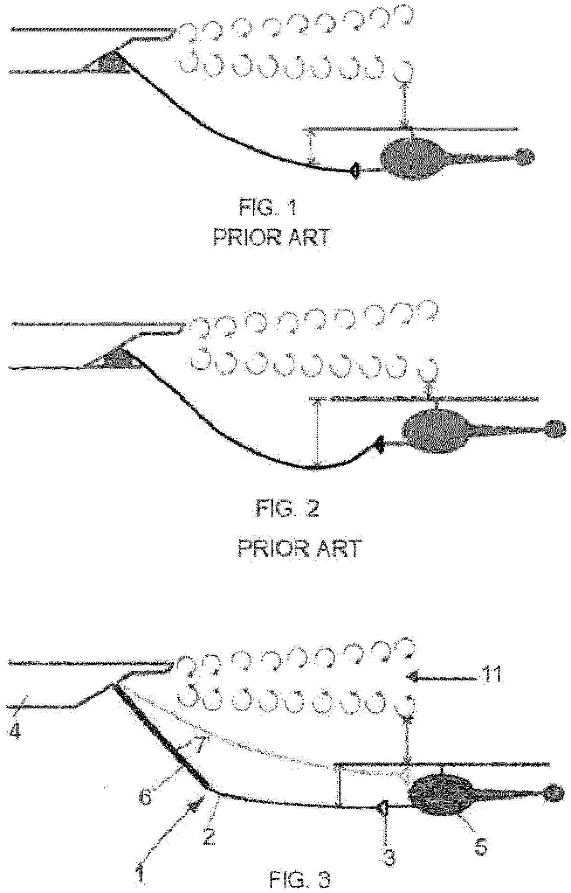

When aircraft are refuelled inflight with hose-drogue refuelling systems, some receiver models can get very close to the wake of the tanker aircraft, what can cause several problems in the receiver, such as instability, control difficulties, vibrations, impossibility to reach the drogue... that make difficult or even impossible the refuelling operation. This is particularly important when refuelling helicopters or large aircraft receivers. In helicopters it is required to keep the hose of the refuelling system as far as possible from the helicopter rotor to avoid impact. In helicopters, immediately before contact takes place, the hose and the rotor are close to each other (see Figure 1). Immediatly after connection the helicopter flies higher, thus increasing the distance between the hose and the rotor, but reducing the distance to the wake of the tanker aircraft (see Figure 2).

The procedure described before has two main problems:
- The contact has to be conducted in a position in which the rotor and the hose are close to each other.
- When the helicopter flies higher it gets closer to the wake of the tanker aircraft.

The same happens with the vertical tail of large aircraft receivers.

One possible solution for this is to use a longer hose that flies lower under the wake of the tanker aircraft. However, the longer hose needs to have a lower diameter and therefore the maximum fuel flow is reduced. Alternatively, the hose storage system size could be increased but this would have other drawbacks, for example higher aerodynamic drag.

Document US 2006/043241 A1 discloses a probe and drogue in-flight refuelling system, providing a bladder device having the capability of filling with fluid so as to add weight to a portion of an elongate hose.

### Summary of the invention

The object of the present invention is to provide a refuelling system for aircraft that overcomes or mitigates the mentioned drawbacks without reducing the diameter (and maximum fuel flow) of the existing hoses or increasing the hose storage system size.

The invention provides a refuelling system for aircraft, comprising a hose with a coupling, such that the hose is suitable for connecting an aircraft tanker to a receiver aircraft and the coupling is placed at one end of the hose and is suitable for connecting to a fuel inlet of the receiver aircraft, the refuelling system for aircraft additionally comprising means for introducing forces onto the hose in addition to the weight of the hose, wherein the means for introducing forces onto the hose in addition to the weight of the hose is at least one concentrated weight, wherein the at least one concentrated weight can be placed at any position on the hose and can move along the hose through the action of:
- a hoist system, or
- a mechanical system with wheels or tracks that embrace the hose.

The means to introduce additional forces along the hose is used to modify the shape of the hose in flight, in order to keep the receiver further away from the wake of the tanker aircraft and/or increase the distance between the hose and the rotor from the beginning of the operation in the case of helicopters as receivers.

Accordingly, this configuration of the refuelling system modifying the distribution of weight along the length of the hose allows a change in the shape of the hose in flight, such that the mentioned problems of the prior art systems are avoided.

Other characteristics and advantages of the present invention will be clear from the following detailed description of several embodiments illustrative of its object in relation to the attached figures.

### Brief description of drawings

Figure 1 shows a view of a prior art refuelling system connected to a tanker aircraft and to a helicopter immediately before the contact of the hose of the refuelling system with the helicopter.
Figure 2 shows a view of a prior art refuelling system connected to a tanker aircraft and to a helicopter immediately after the contact of the hose of the refuelling system with the helicopter.
Figure 3 shows a view of an embodiment of a refuelling system connected to a helicopter.
Figure 4 shows a view of another embodiment of a refuelling system connected to an aeroplane.
Figure 5 shows a view of another embodiment of a refuelling system connected to an aeroplane.
Figure 6 shows a view of another embodiment of a refuelling system connected to a helicopter.
Figure 7 shows a view of another embodiment of a refuelling system of the invention connected to a helicopter.
Figure 8 shows a view of another embodiment of a refuelling system connected to a helicopter.
Figure 9 shows a view of another embodiment of a refuelling system connected to a helicopter.
Figure 10 shows a view of another embodiment of a refuelling system connected to a helicopter.
Figure 11 shows several simulated hose shapes corresponding to several embodiments of refuelling systems for aircraft.

### Detailed description of the invention

Figures 1 and 2 show a prior art refuelling system connected to a helicopter. The refuelling system for aircraft comprises a hose with a coupling. The hose connects the aircraft tanker to the receiver aircraft (which is a helicopter in Figures 1 and 2). The coupling is placed at the end of the hose and can be connected to a fuel inlet of the receiver aircraft. Typical length and weight of empty hoses are 30 m and 75 kg. When the hose is deployed it adopts a shape that is given by the equilibrium of the forces involved.

The invention consists of introducing by some means additional forces onto the hose 2 to modify its shape in flight to keep the receiver 5 further away from the wake 11 of the tanker aircraft 4 and/or increase the distance between the hose 2 and the rotor from the beginning of the operation in the case of helicopters as receivers 5, what also reduces or even eliminates the need of the helicopter to fly higher in order to keep the hose 2 away from the rotor.

In Figure 1 it can be seen that in prior art refuelling systems immediately before the connection with the helicopter the hose of the refuelling system and the rotor of the helicopter are close to each other. In Figure 2 it can be seen that immediately after the contact of the hose with the helicopter, the helicopter flies higher, thus increasing the distance between the hose and the rotor but reducing the distance to the wake of the tanker aircraft.

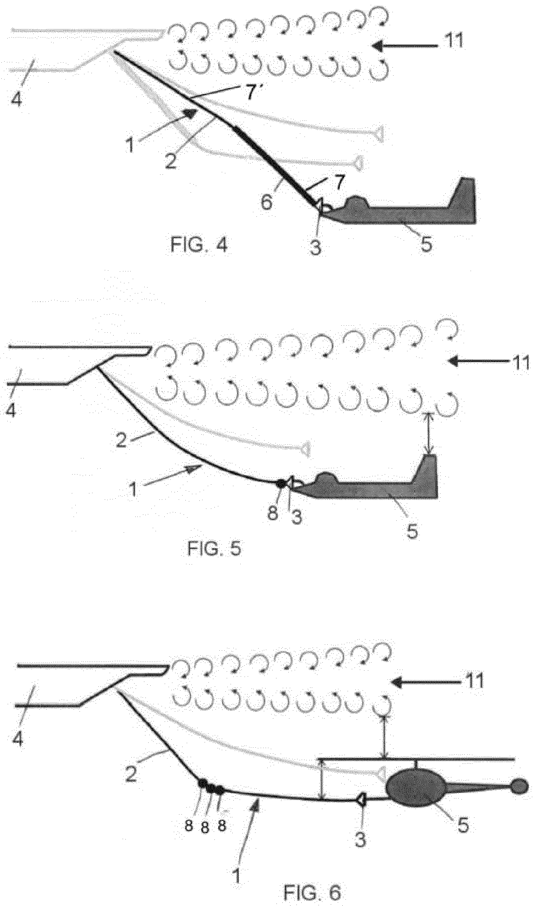

Fig. 3 and Fig. 4 show an embodiment of the refuelling system 1 for aircraft which does not form part of the claimed invention where the distribution of weight along the hose 2 is used as an additional design parameter that allows modifying the shape of the hose 2 in flight to keep the coupling further away from the wake 11 of the tanker aircraft 4 and, in the case of helicopter as receivers 5, increase the distance between the hose 2 and the rotor from the beginning of the operation. In Fig. 3 the hose 2 consists of two stretches or sections 7, 7'; however, the hose 2 may consist of more than two stretches or sections (for instance, a third stretch or section can exist between stretch 7 and stretch 7'). The stretch 7' closer to the tanker 4 is heavier than the one closer to the receiver 5. The weight of the first stretch 7' makes the hose 2 fly lower. The second stretch 7 is lighter to allow it to fly more horizontally and keep it further away from the rotor. The length of each stretch 7, 7' can be modified depending on the desired shape. In Fig.4 the heavier stretch is the second one, i.e. stretch 7. This lowers the coupling more effectively but increases hose angle thus reducing the distance hose-rotor, making this embodiment probably not appropriate for helicopters.

In Fig. 3 additional weights 6 are placed externally on section 7' of the hose 2. It is also possible that additional weights 6 are placed internally in section 7'.

In Fig. 4 additional weights 6 are placed externally on section 7 of the hose 2. It is also possible that additional weights 6 are placed internally in section 7.

In Fig. 4 the additional weights 6 are placed along the section 7 of the hose 2 that comprises the coupling 3.

In Fig. 3 the additional weights 6 are placed along the section 7' of the hose 2 opposite the section 7 of the hose 2 that comprises the coupling 3.

Additional weights 6 can also be placed along intermediate sections placed between section 7 and section 7', or internally in those intermediate sections.

The increase of weight along desired hose stretches 7, 7' could be achieved for example by manufacturing the hose 2 with different materials or by embedding lead (or other heavy material) thread in the material of conventional hoses. Given the lead density only 4.4 dm³ of lead would increase the weight of the hose in 50 kg (the volume of a 30 m hose is around 235 dm³).

Fig. 5 shows another embodiment which does not form part of the claimed invention, in which a weight 8 close to the coupling 3 is placed. This weight 8 contributes to separating the receiver 5 from the wake 11 of the tanker aircraft 4 more efficiently than the previous embodiments.

Fig. 6 shows another embodiment which does not form part of the claimed invention, in which at least one weight 8 is located in an intermediate position along hose length. These weights 8 contribute to separating the receiver 5 from the wake 11 of the tanker aircraft 4 less efficiently than the previous embodiment, but here the additional weights are placed far from the receiver 5 probe, what can reduce the loads on this probe during connection.

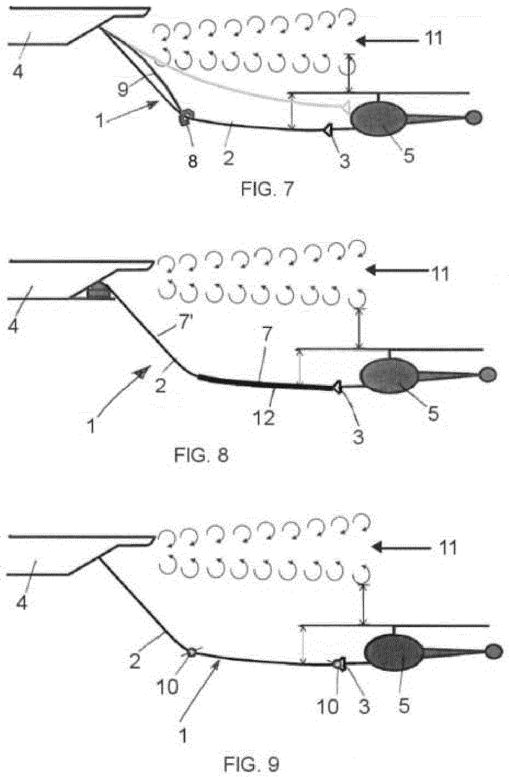

Fig. 7 shows an embodiment of the invention, in which once the hose 2 is extended an additional weight 8 moves along the hose 2 to reach an appropriate position. This additional weight 8 can be deployed along the hose 2 by the action of the aerodynamic drag, and retracted for example with a hoist system 9. The at least one concentrated weight 8 can also be moved along the hose 2 through the action of a mechanical system with wheels or tracks that embrace the hose 2. An active brake can be incorporated to act on the additional weight 8 that moves along the hose 2 in order to avoid its movement once it has been placed in the desired position.

Fig. 8 shows another embodiment which does not form part of the claimed invention, in which the means to introduce forces in the hose 2 consists of modifying aerodynamic drag by using hose diameter as an additional design parameter. In this figure the hose 2 consists of two stretches 7, 7' but they could be more than two. The first one has lower diameter to reduce drag and keep the coupling far from the tanker wake 11. The second one has bigger diameter to increase drag and fly more horizontal to keep it farther from a helicopter rotor. The increase of diameter could be achieved by surrounding the hose 2 with additional material 12, for instance.

Fig. 9 shows another embodiment which does not form part of the claimed invention, in which the means to introduce forces in the hose 2 consists of aerodynamic devices 10 placed fixed or movable along the hose 2. The aerodynamic device 10 is able to produce a constant force downwards on the hose, or to produce a constant force downwards on the hose in addition to a torque to compensate hose rotation. In another option, the aerodynamic device 10 is not coupled with the hose rotation to avoid the need to compensate its rotation. In case of movable device, the means proposed to place it in the right position can be the same proposed for weights in Fig. 7.

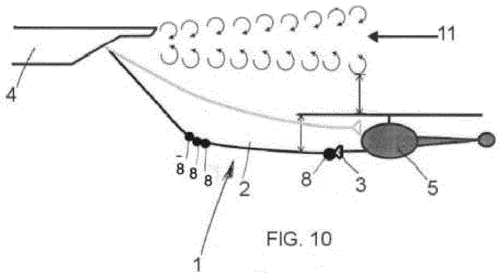

Fig. 10 shows another embodiment which does not form part of the claimed invention, in which two of the previous embodiments are combined (the ones in figures 5 and 6).

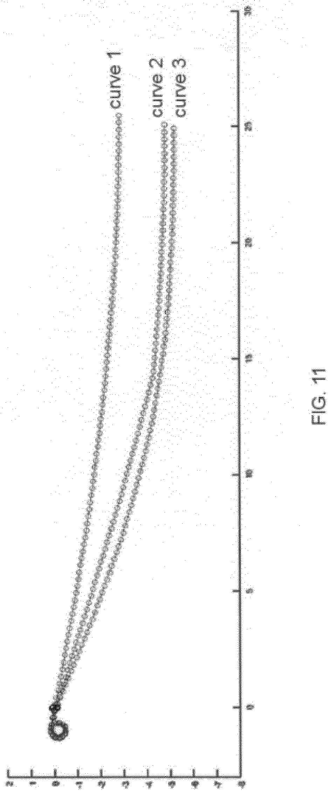

Figure 11 shows several simulated hose shapes corresponding to several embodiments of refuelling systems 1 for aircraft. Curve 1 represents the hose shape of the refuelling system 1 when there is not any additional force on the hose 2 (prior art). Curve 2 represents the hose shape of the refuelling system 1 when there is a concentrated weight 8 of 50 kg in an intermediate position. Curve 3 represents the hose shape of the refuelling system 1 when there is a tripled hose weight per unit of length in the first 15 meters (i.e., an increased weight in a section of the hose 2).

Although the present invention has been fully described in connection with suggested embodiments, it is evident that modifications may be introduced within the scope thereof, not considering this as limited by these embodiments, but by the contents of the following claims.

## Claims

1. Refuelling system (1) for aircraft, comprising a hose (2) with a coupling (3), such that the hose (2) is suitable for connecting an aircraft tanker (4) to a receiver aircraft (5) and the coupling (3) is placed at one end of the hose (2) and is suitable for connecting to a fuel inlet of the receiver aircraft (5), the refuelling system (1) for aircraft additionally comprising means for introducing forces onto the hose (2) in addition to the weight of the hose (2), wherein the means for introducing forces onto the hose (2) in addition to the weight of the hose (2) is at least one concentrated weight (8), wherein the at least one concentrated weight (8) can be placed at any position on the hose (2), **characterized in that** the at least one concentrated weight (8) can move along the hose (2) through the action of:
- a hoist system (9), or
- a mechanical system with wheels or tracks that embrace the hose (2).

2. Refuelling system (1) for aircraft, according to claim 1, which additionally comprises an active brake to act on the at least one concentrated weight (8) to block its movement along the hose (2) once the concentrated weight (8) is properly placed.

## Patentansprüche

1. Betankungssystem (1) für Luftfahrzeuge, umfassend einen Schlauch (2) mit einer Kupplung (3), so dass der Schlauch (2) zum Verbinden eines Betankungsflugzeugs (4) mit einem zu betankenden Flugzeug (5) geeignet ist und die Kupplung (3) an einem Ende des Schlauchs (2) platziert ist und zum Verbinden mit einem Treibstoffeinlass des zu betankenden Flugzeugs (5) geeignet ist, wobei das Betankungssystem (1) für Luftfahrzeuge zusätzlich ein Mittel zum Einleiten von Kräften auf den Schlauch (2) zusätzlich zum Gewicht des Schlauchs (2) umfasst, wobei das Mittel zum Einleiten von Kräften auf den Schlauch (2) zusätzlich zum Gewicht des Schlauchs (2) mindestens ein konzentriertes Gewicht (8) ist, wobei das mindestens eine konzentrierte Gewicht (8) an beliebiger Position an dem Schlauch (2) platziert werden kann, **dadurch gekennzeichnet, dass** sich das mindestens eine konzentrierte Gewicht (8) durch die Wirkung von:
- einem Hebesystem (9) oder
- einem mechanischen System mit Rädern oder Raupen, die den Schlauch (2) umschließen, entlang des Schlauchs (2) bewegen kann.

2. Betankungssystem (1) für Luftfahrzeuge nach Anspruch 1, zusätzlich umfassend eine aktive Bremse zum Wirken auf das mindestens eine konzentrierte Gewicht (8), um seine Bewegung entlang des Schlauchs (2) zu blockieren, sobald das konzentrierte Gewicht (8) richtig platziert ist.

## Revendications

1. Système de ravitaillement en carburant (1) pour aéronef, comprenant un tuyau souple (2) muni d'un raccord (3), de sorte que le tuyau souple (2) soit adapté au raccordement d'un avion ravitailleur (4) à un aéronef récepteur (5) et que le raccord (3) soit placé à une extrémité du tuyau souple (2) et soit adapté au raccordement à une entrée de carburant de l'aéronef récepteur (5), le système de ravitaillement (1) pour aéronef comprenant en outre un moyen pour appliquer des forces sur le tuyau souple (2) en plus du poids du tuyau souple (2), le moyen pour appliquer des forces sur le tuyau souple (2) en plus du poids du tuyau souple (2) étant au moins un poids concentré (8), l'au moins un poids concentré (8) pouvant être placé à n'importe quelle position sur le tuyau souple (2), **caractérisé en ce que** l'au moins un poids concentré (8) peut se déplacer le long du tuyau souple (2) sous l'action de :
- un système de levage (9), ou
- un système mécanique pourvu de roues ou de chenilles qui entourent le flexible (2).

2. Système de ravitaillement en carburant (1) pour aéronef, selon la revendication 1, qui comprend en outre un frein actif pour agir sur l'au moins un poids concentré (8) pour bloquer son mouvement le long du tuyau souple (2) une fois que le poids concentré (8) est correctement placé.
